# EUROPÄISCHE PATENTSCHRIFT

(11) **EP 4 094 006 B1**
(45) Veröffentlichungstag und Bekanntmachung des Hinweises auf die Patenterteilung: **15.07.2026**
(21) Anmeldenummer: 21701477.8
(22) Anmeldetag: 20.01.2021
(51) Int. Cl.: F16M 7/00

(54) **NIVELLIERSCHUH, FÜR EINE WERKZEUGMASCHINE ODER ÄHNLICHEM**
LEVELING SHOE, FOR A MACHINE TOOL OR THE LIKE
PATIN DE NIVELLEMENT POUR MACHINE-OUTIL OU SIMILAIRE

(30) Priorität: 24.01.2020 CH 802020; 04.12.2020 CH 15422020
(43) Veröffentlichungstag der Anmeldung: 30.11.2022
(73) Patentinhaber: NIVELL AG, 5620 Bremgarten (CH)
(72) Erfinder: LANG, Patrick, 8919 Rottenschwil (CH); BUCHER, Pierre, 3006 Bern Bern (CH)
(74) Vertreter: Luchs, Willi
(86) Internationale Anmeldenummer: PCT/EP2021/051197
(87) Internationale Veröffentlichungsnummer: WO 2021/148464

(56) Entgegenhaltungen:
- EP-B1- 1 236 006
- WO-A1-96/37729
- KR-B1- 101 427 522
- US-A1- 2013 048 927

## Beschreibung

Die Erfindung betrifft einen Nivellierschuh, vorzugsweise für eine Werkzeugmaschine oder ähnlichem, der mit einer Grundplatte, einer auf dieser angeordneten Verstellvorrichtung und einem von letzterer höhenverstellbaren Tragelement für den zu nivellierenden Gegenstand, vorzugsweise eine Werkzeugmaschine, versehen ist, dies nach dem Oberbegriff des Anspruchs 1.

Eine gattungsmässige Nivelliervorrichtung ist in der Druckschrift EP 1 236 006 B1 offenbart, die bekanntlich zum Höhenverstellen eines auf der Tragplatte lastenden Gegenstandes dienen, bis dieser eine ausgelotete Stellung erreicht hat. Sie zeichnet sich dabei dadurch aus, dass die jeweilige Verstellvorrichtung mit zwei gleichzeitig auseinander zu oder voneinander weg beweglichen Stellkeilen versehen ist, so dass die Last des zu nivellierenden Gegenstands gleichmässig auf die beiden Stellkeile aufgeteilt wird. Die Vorrichtung hat ausserdem den Vorteil, dass die auf sie wirkenden Axialkräfte einander entgegenwirken, so dass für ihre Betätigungsmittel keine aufwendige Axiallagerung nötig ist.

Bei dieser bekannten Nivelliervorrichtung ist zum Zentrieren der Tragplatte eine in der Grundplatte rechtwinklig zur Basisfläche befestigte Zentrierhülse vorgesehen, auf welche die Tragplatte mit einer zentralen Bohrung verschiebbar aufgesetzt ist. Eine solche Zentrierung ist unter der Wirkung von Vertikalkräften stabil. Wenn jedoch der Nivellierschuh durch Horizontalkräfte beansprucht wird, wie dies bei neuartigen modernen Werkzeugmaschinen durch die schnelleren Vorschubbewegungen der Schlitten bzw. der Werkzeuge auftritt, entstehen bei diesem ungenügende Festigkeiten. Durch diese bei den Werkzeugmaschinen mehrachsig eingesetzten Werkzeuge und den höheren Beschleunigungen der bewegten Komponenten, wie Schlitten und Werkstücke an der Maschine entstehen neben den bekannten Kräften in Vertikalrichtung solche in Horizontalrichtung, die auf die Nivellierschuhe und von diesen ins Fundamten übertragen werden und ihre Stabilitäten in erheblichem Masse beeinträchtigen.

Bei einem höhenverstellbaren Support gemäss der Druckschrift KR101427522 ist ein vertikales Führungselement zwischen einer unteren und einer oberen Basis angeordnet. Zudem ist ein Stützelement für den horizontalen Keilabstand mit einem Paar von Keilelementen gekoppelt, die symmetrisch zum Führungselement verlaufen. Ein vertikales Führungselement ermöglicht eine Führung der Keilelemente und der oberen Basis. Stützelemente für den vertikalen Abstand der Basis sind an beiden Seiten des Führungselements zwischen den zwei Keilelementen installiert, wobei mit diesen Stützelementen der mittlere Abschnitt der oberen Fläche der unteren Basis und der mittlere Abschnitt der unteren Fläche der oberen Basis zueinander in einem gewünschten Abstand fixierbar sind. Bei einer auf die obere Basis gestellten vertikalen Last wird durch die zwei Keilelemente und das Stützelement die Festigkeit der Struktur verstärkt. Das Stützelement steht mit der unteren und der oberen Basis durch Schrauben in Eingriff, um eine Kraft zu erzeugen, die auf den Mittelabschnitt der oberen Basis ausgeübt wird, weil dieser dazu neigen soll, sich nach oben zu biegen.

Die Druckschrift US 2013/0048927 offenbart eine Vorrichtung für aufwärts und abwärts bewegbare Objekte relativ zu einer feststehenden Oberfläche. Sie umfasst eine Hebevorrichtung mit einem Paar relativ zueinander bewegbarer Blöcke und einer von diesen getragenen Tragvorrichtung, die relativ zu der festen Oberfläche mit dem anzuhebenden Objekt verbindbar sind. Mittels eines Aktuators können die Blöcke relativ zueinander bewegt werden, die diese Tragvorrichtung relativ zu der festen Oberfläche verstellen, um die Objekte anzuheben oder abzusenken. Ein Paar von hülsenförmigen Elementen tragen die Achswellen relativ zu den Eintrittsöffnungen bei der Arbeitsoberfläche.

Der Erfindung liegt die Aufgabe zugrunde, mit einfachen und kostengünstigen Mitteln einen Nivellierschuh der eingangs genannten Art derart zu verbessern, dass er auch bei Auftreten von bedeutend grösseren Horizontalkräften im betrieblichen Zustand der darauf lagernden Werkzeugmaschinen oder ähnlichem diese festigkeitsmässig aufnehmen kann und dauerhaft stabil ist.

Diese Aufgabe ist erfindungsgemäss durch die Merkmale des Anspruchs 1 gelöst.

Mit der nach der Erfindung vorgesehenen seitlichen Abstützung des höhenverstellbaren Tragelementes durch zumindest beidseitig zu der Verstellvorrichtung auf der Grundplatte gehaltenen Stützmittel können bei Verwendung des bewährten Nivellierschuhs auf äusserst einfache Weise diese bei Werkzeugmaschinen oder ähnlichem im betrieblichen Zustand erzeugten Horizontalkräfte um 360° dauerhaft aufgenommen werden.

Vorteilhaft können als eine Variante beidseitig zum Tragelement je ein Stützmittel angeordnet sein, welches jeweils mit einer gewölbten oder ähnlich geformten Stützfläche ausgebildet und vorzugsweise konvex und dasjenige des Tragelementes konkav geformt ist. Damit ergibt sich eine einfache Konstruktion mit dieser Abstützung.

Beidseitig zum Tragelement je zwei Stützmittel anzuordnen, die mit je einer Stützfläche in je einer Winkelschräge zur Längsausbildung der Schenkel versehen sind, bietet eine äusserst komfortable Aufnahme solcher Horizontalkräfte.

Als eine zweckmässige Ausbildung kann das Stützmittel jeweils durch ein Verstellelement senkrecht gegen eine korrespondierende Stützfläche beim Tragelement für eine spielfreie Verbindung justierbar sein.

Des Weiteren sieht die Erfindung vor, dass ein das Tragelement umgebender rahmenförmiger Stützring mit innenseitigen Stützmitteln vorgesehen ist, der auf der Grundplatte lösbar befestigt ist. Damit kann die Stabilität des Nivellierschuhs insgesamt erhöht werden.

Bei einer besonders stabilen Ausbildung des Nivellierschuhs ist Tragelement aussenseitig rundum in einer Zentrierbohrung eines auf der Grundplatte befestigten robusten Gehäuses geführt, welches als Stützmittel ausgebildet ist.

Auf diese Weise wird die Tragplatte, auf der die Werkzeugmaschine steht, auch unter der Wirkung hoher seitlicher Horizontalkräfte stets sicher geführt, weil die Robustheit des Gehäuses stets einen dauerhaften Halt der Tragplatte in der Zentrierbohrung in horizontaler Richtung gewährleistet.

Mit dem Vorsehen dieses robusten kompakten Gehäuses kann der erfindungsgemässe Nivellierschuh sowohl herstellungstechnisch als auch hinsichtlich des Bearbeitungsumfanges sehr einfach gefertigt werden. Dieses Gehäuse erleichtert zudem die Montage und ermöglicht zudem eine leichtere Instandhaltung des Schuhs. Nebstdem ist auch die Verstellvorrichtung für die Tragplatte gut geschützt.

Im Sinne einer möglichst hohen Robustheit des Gehäuses ist es gemäss der Erfindung vorgesehen, dass das Gehäuse relativ dickwandig mit einer kasten- oder topfförmigen Ausbildung versehen ist.

Zur Erhöhung der Stabilität des Gehäuses ist es zweckmässig, dieses seitlich mit quer zur Verstellrichtung gerichteten Verstärkungsrippen zu versehen, welche vom oberen Gehäuseteil bis zur Grundplatte ragen, und zudem seine Seitenwände teils gegen oben hin schräg nach innen auszubilden.

Es ist im Sinne einer möglichst einfachen Bauweise vorteilhaft, wenn der schlittenförmige Träger ein U-förmiges Profil aufweist, das mit zwei seitlichen Führungsstegen und einem mittleren Stützrahmen für die Tragplatte des Nivellierschuhs versehen ist. Die Baulänge der Führungsstege ist vorzugsweise so bemessen, dass auch bei maximal auseinanderbewegten Stellkeilen diese seitlich noch mindestens teilweise von den Führungsstegen überlappt sind. Damit ist eine sichere Führung des schlittenförmigen Trägers auch in der Endposition der Stellkeile gewährleistet.

Die Erfindung sowie weitere Vorteile derselben sind nachfolgend anhand von mehreren Ausführungsbeispielen unter Bezugnahme auf die Zeichnung näher erläutert. Es zeigt:
- Fig. 1: einen erfindungsgemässen Nivellierschuh in einer Explosionsansicht dargestellt;
- Fig. 2: einen Horizontalschnitt des Nivellierschuhs nach Fig. 1;
- Fig. 3: einen Längsschnitt des Nivellierschuhs nach Fig. 1;
- Fig. 4: eine erste Variante eines erfindungsgemässen Nivellierschuhs in einer Explosionsansicht;
- Fig. 5: je einen horizontalen oberen bzw. unteren Halbschnitt des Nivellierschuhs nach Fig. 4;
- Fig. 6: einen Halbschnitt bzw. eine Draufsicht auf eine zweite Variante eines erfindungsgemässen Nivellierschuhs;
- Fig. 7: eine Draufsicht einer dritten Variante eines erfindungsgemässen Nivellierschuhs,
- Fig. 8: eine vierte Variante eines erfindungsgemässen Nivellierschuhs in einer Explosionsansicht dargestellt;
- Fig. 9: einen erfindungsgemässen Nivellierschuh als fünfte Variante, in einer Explosionsansicht dargestellt;
- Fig. 10: einen Längsschnitt des Nivellierschuhs nach Fig. 9 im zusammengebauten Zustand; und
- Fig. 11: einen Horizontalschnitt des Nivellierschuhs nach Fig. 9.

Der Nivellierschuh gemäss den Ausführungsbeispielen dient vornehmlich als Auflager von schweren Werkzeugmaschinen, wie Fräsmaschinen, Bohrwerke, spanabhebende Bearbeitungszentren, ähnlichen schweren Maschinenanlagen, Gerüsten oder Stahlkonstruktionen mit integrierten dynamischen Bauelementen oder Baugruppen etc., deren Arbeitsweise mit den sehr hohen Vorschub- bzw. Verstellgeschwindigkeiten der Schlitten bzw. der Werkzeuge oder ähnlichen bewegbaren Bauteilen, ein absolut stabiles und genaues Positionieren der Maschine auch bei Auftreten von hohen Horizontalkräften ermöglicht. Diese Werkzeugmaschinen oder ähnlichem stehen dabei auf einem Fundament, das aus verschiedenen Materialien bestehen kann, beispielsweise aus Beton, Metallplatten oder aus einer Kombination von diesen oder anderen Materialien.

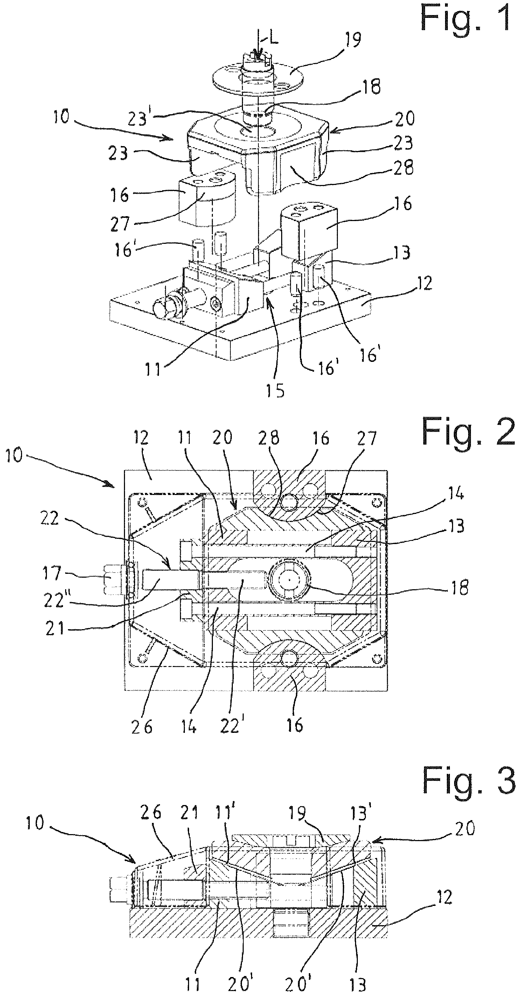

Der Nivellierschuh 10 nach Fig. 1 bis Fig. 3 besteht aus einer Grundplatte 12, einer auf dieser angeordneten Verstellvorrichtung 15 und einem von letzterer höhenverstellbaren Tragelement 20, auf dem die Werkzeugmaschine oder dergleichen steht. Optional ist ein sich im Zentrum des Nivellierschuhs 10 befindlicher hülsenförmiger Zentrierdorn 18 vorgesehen, der in der Grundplatte 12 befestigt ist und durch eine Bohrung 23' im Tragelement 20 ragt, als Montagehilfe dient und dabei dieses Tragelement zusätzlich zentrierend führt. Es ist ausserdem auf einer kugelkalotten-förmigen Ausnehmung auf der Oberseite des Tragelementes 20 eine unterseitig korrespondierend ausgebildete Auflagescheibe 19 wegnehmbar angebracht oder draufgelegt.

Die Verstellvorrichtung 15 besteht gemäss Fig. 3 aus zwei Stellkeilen 11, 13, die auf der Grundplatte 12 aufliegen und mit Auflageflächen 11', 13' versehen sind, auf denen korrespondierende unterseitige Kontaktflächen 20' der Tragplatte 20 mit der gleichen Neigung flächig aufliegen. Wie aus Fig. 2 und Fig. 3 ersichtlich, ist der hintere Stellkeil 13 mit einem vor dem Stellkeil 11 angeordneten Anschlagteil 21 mit durch den Stellkeil 11 gleitend geführten Verbindungsschrauben 14 fest verbunden.

Zum Betätigen der Verstellvorrichtung 15 dient eine Schraubenspindel 22 mit zwei die gleiche Gewindesteigung, aber in entgegengesetzten Steigungsrichtungen ausgebildeten Gewindeteilen 22', 22", von denen der Gewindeteil 22" im Anschlagsteil 21 und der Gewindeteil 22' im vorderen Stellkeil 11 eingeschraubt ist. Beim Drehen der Schraubenspindel 22 werden beide Stellkeile 11, 13 gleichzeitig aufeinander zu oder voneinander weg bewegt und bewirken damit, dass die Tragplatte 20 des Nivellierschuhs unter Beibehaltung der horizontalen Ausrichtung in Höhenrichtung über einen bestimmten Hub verstellt werden kann.

Die Schraubenspindel 22 ist in einer andeutungsweise gezeigten Abdeckhaube 26 für den Schuh gelagert und es ragt ein sechskantiger Schraubkopf 17 oder dergleichen für die Betätigung der Schraubenspindel 22 heraus, der gegebenenfalls von einem Stellblech zur Verstellsicherung arretierbar ist.

Erfindungsgemäss ist das höhenverstellbare Tragelement 20 beidseitig zu der Verstellvorrichtung 15 von je einem auf der Grundplatte 12 gehaltenen Stützmittel 16 seitlich abgestützt. Das Stützmittel 16 und das Tragelement 20 sind mit korrespondierenden annähernd parallel zu der Traglastrichtung L verlaufenden Stützflächen 27, 28 ausgebildet, die jeweils im horizontalen Querschnitt betrachtet gewölbt oder ähnlich geformt sind. Die Stützfläche 27 der Stützmittel 16 ist vorzugsweise konvex und diejenige des Tragelementes 20 ist konkav geformt, was aber auch umgekehrt ausgeführt sein könnte. Diese Stützflächen 27, 28 sind im Querschnitt teilkreisförmig ausgebildet. Sie könnten aber auch elliptisch oder mehreckig ausgestaltet sein.

Dieses Tragelement 20 ist vorzugsweise U-förmig mit zwei nach unten sich erstreckenden seitlichen Schenkeln 23 ausgebildet, bei denen aussenseitig das jeweilige klotzförmige Stützmittel 16 angreift, indes innenseitig die Seitenflächen der Stellkeile 11, 13 angrenzen. Vorzugsweise ist aber zwischen den Schenkeln und den Stellkeilen ein geringer Spalt im Bereich von mindestens einigen Zehntelmillimetern vorgesehen, damit diese Schenkel 23 bei auftretenden Horizontalkräften nicht gegen diese Stellkeile 11, 13, sondern ausschliesslich gegen die Stützmittel 16 gedrückt werden. Damit ist eine überbestimmte horizontale Lagerung des Tragelementes 20 verhindert.

Die Stützmittel 16 ihrerseits sind jeweils durch vorzugsweise mehrere Zentrierstifte 16' und wenigstens ein nicht gezeigtes Befestigungselement, vorzugsweise eine Spannschraube, mit der Grundplatte 12 verbunden. Diese zum Beispiel zwei Zentrierstifte 16' sind pass- und positionsgenau in Bohrungen des Stützmittels 16 und der Grundplatte 12 montiert und so dimensioniert, dass sie die Horizontalkräfte in die Grundplatte 12 übertragen können, während das Befestigungselement primär das Stützmittel fixiert und die durch diese Horizontalkräfte entstehenden Drehmomente übernimmt.

Sehr vorteilhaft sind die annähernd parallel zur Traglastrichtung verlaufenden Stützflächen 27, 28 im oberen Bereich des jeweiligen Stützmittels 16 ausgebildet, welches annähernd eine Höhe aufweist, die sich bis zu der Oberseite des höhenverstellbaren Tragelementes 20 in seiner untersten Position erstreckt, wie dies in Fig. 3 annähernd ersichtlich ist. Damit kann erreicht werden, dass die horizontalen Kräfte quer durch das Tragelement 20 ohne Umlenkung direkt in das jeweilige Stützmittel 16 geleitet werden und es können von diesen Stützmitteln 16 die in unterschiedliche Richtungen entstehenden Horizontalkräfte um 360° praktisch gleichsam aufgenommen und in das Fundament oder dergleichen weitergeleitet werden. Hingegen die Vertikalkräfte in Traglastrichtung L werden getrennt vom Tragelement 20 durch die Stellkeile 11, 13 in die Tragplatte und das Fundament geleitet. Durch diese Aufteilung können höhere Kräfte aufgenommen werden und es ergibt sich eine optimale und klar getrennte Kraftführung zwischen vertikalen und horizontalen Kraftkomponenten.

Bevorzugt ist zumindest eine der beiden miteinander korrespondierenden Stützflächen 27, 28 im Vertikalschnitt betrachtet leicht bombiert ausgebildet, damit der Linienkontakt dieser Stützflächen in einem Belastungsfall stets in Kraftrichtung erfolgt, auch wenn kleine Biegungen des Stützmittels oder beim Tragelement um die Vertikalachse auftreten.

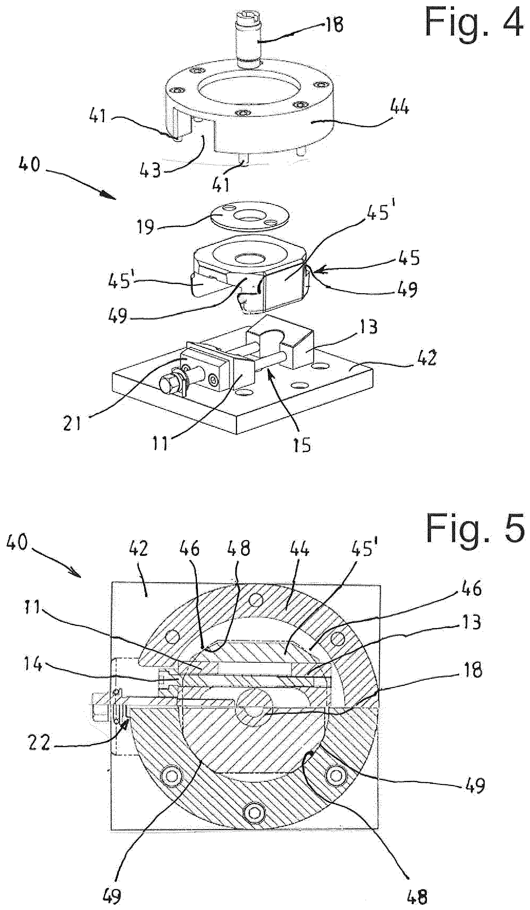

Fig. 4 und Fig. 5 zeigen ein Ausführungsbeispiel eines Nivellierschuhs 40, der an sich gleich wie derjenige nach Fig. 1 mit einer Grundplatte 42 und einer Verstellvorrichtung 15 versehen ist. Es sind daher nachfolgend nurmehr die Unterschiede dargetan. Es ist ein ähnliches U-förmiges Tragelement 45 mit unterseitigen auf den Stellkeilen 11, 13 aufliegenden Kontaktflächen und mit einer oben drauf angebrachten oder gestellten Auflagescheibe 19 vorgesehen, die ebenso mit korrespondierenden kugelkalotten-förmigen Flächen ausgebildet sind.

Erfindungsgemäss ist das höhenverstellbare Tragelement 45 beidseitig zu der Verstellvorrichtung 15 von je zwei Stützmitteln 46 seitlich abgestützt. Diese Stützmittel 46 sind an einem das Tragelement 45 umgebenden rahmenförmigen Stützring 44 nach innen vorstehend ausgebildet, der auf der Grundplatte 42 lösbar befestigt ist. Es ist innenseitig bei diesen Stützmitteln 46 je eine Stützfläche 48 ausgebildet, die korrespondierend in Flächen- bzw. Linienkontakt mit aussenseitig beim Tragelement 45 geformten Stützflächen 49 stehen und gleichermassen annähernd parallel zu der Traglastrichtung L ausgerichtet sind. Sehr vorteilhaft sind diese Stützflächen 48, 49 jeweils gemeinsam aus einer einzigen kreisförmigen Fläche innenseitig im Stützring 44 bzw. aussenseitig beim Tragelement 45 gebildet. Damit ergibt sich eine einfache Fertigung, denn diese können beim Stützring 44 bzw. beim Tragelement 45 aussen bei den parallel zueinander verlaufenden Schenkeln 45' jeweils in einem Arbeitsgang durch Abdrehen genau erzeugt werden.

Diese vier von den Stützmitteln 46 gebildeten konkaven Stützflächen 48, 49 sind in je einem Aussenbereich der Schenkel 45' symmetrisch zueinander und ihre senkrechten Kraftlinien gegen das Zentrum der Tragelementes 45 hin verlaufend angeordnet.

Dieser Nivellierschuh 40 zeichnet sich im Rahmen der Erfindung dadurch aus, dass dieser Stützring 44, der durch vorzugsweise mehrere Befestigungselemente 41 mit der Grundplatte 42 verbunden ist, mit seinen innen vorstehenden Stützmitteln 46 äusserst stabil ist und entsprechend hohe Belastungen insbesondere hervorgerufen durch diese Horizontalkräfte aufnehmen kann.

Der Stützring 44 ist ferner bei der Schraubenspindel 22 mit einer Ausnehmung 43 versehen, in welche der Anschlagteil 21 mit dem Stellkeil 11 in seiner auseinander bewegten Stellposition ragt. Der Stützring 44 kann unter anderem auch als Giessform mit einer dem Tragelement angepassten Aussenform hergestellt sein und er eignet sich als Bestandteil einer Abdeckhaube. Damit kann auch die gesamte Breite des Nivellierschuhs reduziert werden.

Vorteilhaft wird beim Zusammenbau dieses Nivellierschuhs 40 zuerst das Tragelement 45 durch den Zentrierdorn 18 zur Grundplatte 42 zentriert, anschliessend der Stützring 44 aufgesetzt und durch die Stützmittel 46 zum Tragelement seinerseits zentriert und folglich durch die Befestigungselemente 41 auf der Grundplatte 42 befestigt.

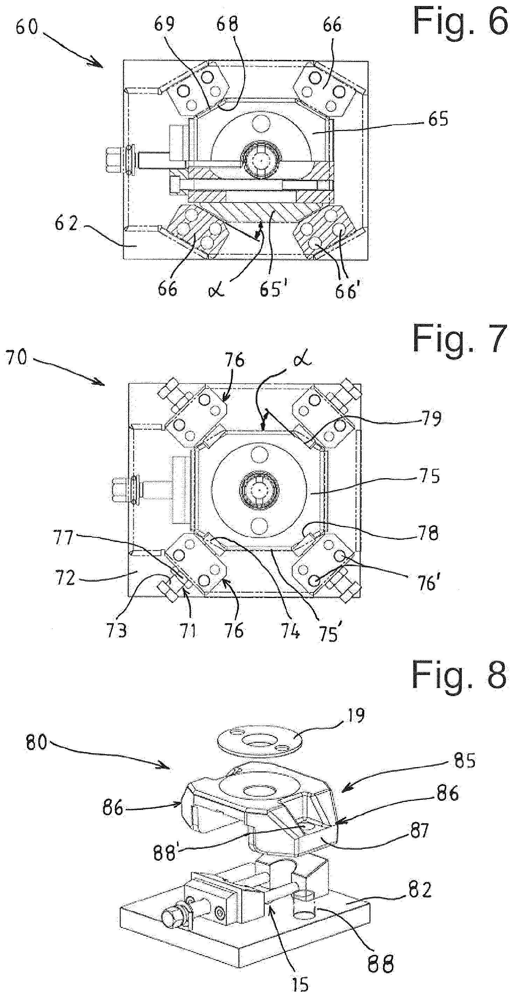

In Fig. 6 und Fig. 7 ist je ein Ausführungsbeispiel eines Nivellierschuhs 60 und 70 veranschaulicht, die gleich wie derjenige nach Fig. 4 in Bezug auf die beidseitig zu der Verstellvorrichtung 15 mit je zwei das Tragelement 45 lagernden Stützmitteln 66, 76 ausgestattet und daher nachfolgend nurmehr die Unterschiede gegenüber diesem und demjenigen nach Fig. 1 dargetan sind. Es sind diese U-förmigen Tragelemente 65, 75 mit unterseitigen auf den Stellkeilen aufliegenden Kontaktflächen vorgesehen.

Im Rahmen der Erfindung ist das jeweilige höhenverstellbare Tragelement 65, 75 beidseitig zu der nicht näher gezeigten Verstellvorrichtung von je zwei Stützmitteln 66, 76 seitlich abgestützt. Diese Stützmittel 66, 76 sind durch vier separate Klötze ausgebildet, die auf der Grundplatte 62, 72 jeweils durch zwei Zentrierstifte 66', 76' und zwei Befestigungselemente lösbar befestigt sind. Es ist innenseitig bei diesen Stützmitteln 66, 76 je eine Stützfläche 68, 78 mit je einer Winkelschräge α zur Längsausbildung der parallel zueinander verlaufenden Schenkeln 65', 75' des Tragelementes 65, 75 ausgebildet. Diese Stützflächen 68, 78 stehen korrespondierend mit aussenseitig beim Tragelement 65, 75 geformten Stützflächen 69, 79 in Flächen- bzw. Linienkontakt und sind gleichermassen annähernd parallel zu der Traglastrichtung L ausgerichtet.

Diese vier Stützflächen 69, 79 sind in je einem Aussenbereich der Schenkel 65' symmetrisch zueinander und ihre senkrechten Kraftlinien gegen das Zentrum des Tragelementes 65, 75 hin verlaufend angeordnet. Die Winkelschrägen α sind vorzugsweise bei allen vieren gleich gross ausgebildet und betragen wie erwähnt zwischen 10° und 60°.

Die Stützmittel 76 des Nivellierschuhs 70 unterscheiden sich von demjenigen nach Fig. 4 bzw. Fig. 6 dadurch, dass sie jeweils durch ein Verstellelement 71 senkrecht gegen die korrespondierende Stützfläche 79 beim Tragelement 75 für einen spielfreien Kontakt justierbar sind. Zweckmässigerweise ist das jeweilige Verstellelement 71 mit einer im Stützmittel 76 verstellbaren Schraube 73 und einem vorderseitig an dieser befestigten Backe 74 bestückt, mittels dem ein Gewicht vor der Montage und Nivellierung einer Werkzeugmaschine auf den Nivellierschuh 70 stellbar ist und danach diese Verstellelemente 71 mit ihren Backen 74 einzeln gegen eine jeweilige Stützfläche 79 des Tragelementes 75 durch Drehen der Schrauben 73 leicht andrückbar sind, so dass dies eine unmittelbare Kraftübertragung vom Tragelement 75 auf die Stützmittel 76 bewirkt. Mittels einer Kontermutter 77 kann die jeweilige Schraube 73 gegen ein Verdrehen gesichert werden. Anschliessend kann die Maschine draufgestellt und nivelliert werden. Mit dieser spielfreien Abstützung kann sich gegenüber den oben erläuterten Ausführungsbeispielen ein Vorteil wegen der spielfreien Verbindung ergeben.

Selbstverständlich könnten zum Beispiel auch zwei Stützmittel 76 mit jeweils einem Verstellelement 71 und gegenüberliegend zwei fixe Stützmittel 66 bei einem jeweiligen Nivellierschuh vorgesehen sein.

Bei einer weiteren Variante eines Nivellierschuhs 80 gemäss Fig. 8 sind die beiden Schenkel 86 eines U-förmigen Tragelementes 85 und die in der Grundplatte 82 gehaltenen Stützmittel 88 unterschiedlich ausgestaltet. Es ist bei diesen seitlichen Schenkeln 86 des Tragelementes 85 jeweils ein nach aussen vorstehendes Sockelelement 87 mit jeweils einer sich in Verstellrichtung des Tragelementes erstreckenden Öffnung 88' und wenigstens ein in diese ragender Zentrierbolzen als korrespondierendes Stützmittel 88 zugeordnet. Damit können ebenso die Horizontalkräfte vom Tragelement 85 in diese Stützmittel 88 übertragen werden. Dieser Zentrierbolzen ist vorteilhaft annähernd spielfrei in der Öffnung 88' geführt. Im Prinzip könnte aber vice versa der jeweilige Zentrierbolzen auch im Sockelelement und die Öffnung in der Grundplatte 82 enthalten sein. Es könnten auch mehr als ein Zentrierbolzen pro Sockelelement vorgesehen sein.

Mit Vorteil sind bei den verschiedenen Varianten ebenso Abdeckhauben, wie in Fig. 3 angedeutet ist, vorgesehen. Auch dieser im Zentrum des Nivellierschuhs befindliche hülsenförmige Zentrierdorn 18 kann bei allen Varianten vorgesehen sein, der in der Grundplatte befestigt ist und durch eine Bohrung im Tragelement ragt und letzteres zentriert, wie dies in den Figuren dargestellt ist. Im Prinzip könnte das jeweilige Stützmittel gegebenenfalls separat zu der Grundplatte gehalten sein.

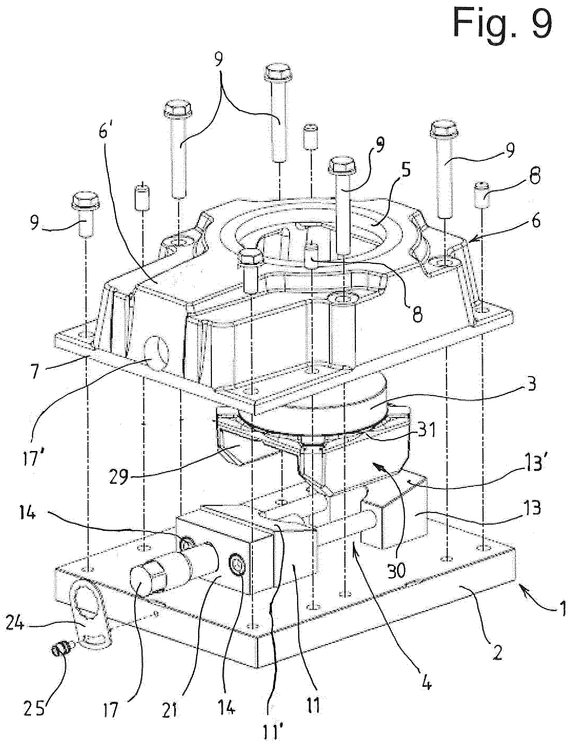

Der Nivellierschuh 1 gemäss Fig. 9 bis Fig. 11 besteht im Wesentlichen aus einer Grundplatte 2, einem mit einem Träger 30 versehenen Tragelement 3, die einstückig oder aneinander befestigt sind, und einer auf der Grundplatte 2 angeordneten Verstellvorrichtung 4 zum Verstellen des Tragelementes 3 in einer zur Ebene der Grundplatte 2 rechtwinkligen Höhenrichtung.

Erfindungsgemäss ist das Tragelement 3 aussenseitig rundum in einer Zentrierbohrung 5 eines auf der Grundplatte 2 befestigten robusten Gehäuses 6 als Stützmittel geführt, in dem auch die Verstellvorrichtung 4 für das Tragelement 3 enthalten ist. Das auf der Oberseite des Trägers 30 angeordnete Tragelement 3 ist scheibenförmig mit einer runden Aussenform ausgebildet und es ist dabei vollumfänglich vom Gehäuse 6 mit der Zentrierbohrung 5 annähernd spielfrei umgeben, wobei das Gehäuse 6 als ein einziges, das Tragelement 3 umgebendes Stützmittel ausgebildet ist.

Das Gehäuse 6 ist topfförmig und relativ dickwandig ausgebildet, wobei in seinen Längswänden 6" quer zur Verstellrichtung der Verstellvorrichtung 4 liegende Verstärkungsrippen 7' eingeformt sind, die vom oberen Gehäuseteil 6' bis zur Grundplatte 2 ragen. Zudem sind zumindest die Seitenwände des Gehäuses 6, die aussen von seinem Befestigungsflansch 7 ausgehen, gegen oben hin mit einigen Winkelgraden schräg nach innen gerichtet, so dass sich eine pyramidenförmige Struktur als Verstärkung des Gehäuses ergibt.

Die Befestigung und genaue Zentrierung des Gehäuses 6 auf der Grundplatte 2 erfolgt mittels mehrerer Zylinderpassstifte 8 und Schrauben 9 um die Zentrierbohrung 5 und in den Eckzonen des sich auf der Unterseite des Gehäuses 6 erstreckenden Befestigungsflansches 7. Zwischen der Grundplatte 2 und dem Gehäuse 6 kann ferner optional eine Dichtung eingelegt sein.

Die Grundplatte 2 und je nach Kraftverhältnissen auch der Befestigungsflansch 7 des Gehäuses 6 könnten sich vorteilhaft in der Breite und/oder in der Länge über den seitlichen Aussenumfang des Gehäuses 6 hinaus erstrecken, damit sie durch zusätzliche Befestigungsmittel, wie Spannschrauben, mit dem Fundament oder dergleichen fixiert werden können, um höhere Horizontalkräfte vom Gehäuse 6 in das Bodenfundament zu übertragen.

Die Verstellvorrichtung 4 ist gleich wie diejenige nach Fig. 3 ausgebildet und es sind daher nachfolgend nurmehr die Unterschiede erläutert. Die Bezugszeichen sind dieselben verwendet worden. Sie besteht im wesentlichen aus zwei im Gehäuse 6 gut geschützten Stellkeilen 11, 13, die auf der Grundplatte 2 aufliegen und mit Auflageflächen 11', 13' für das Tragelement 3 versehen sind. Der hintere Stellkeil 13 ist mit einem vor dem Stellkeil 11 angeordneten Anschlagteil 21 mit durch den Stellkeil 11 gleitend geführten Verbindungsschrauben 14 fest verbunden.

Zum Betätigen der Verstellvorrichtung 4 dient eine Schraubenspindel 22 mit zwei die gleiche Gewindesteigung, aber in entgegengesetzten Steigungsrichtungen ausgebildeten Gewindeteilen 22', 22", von denen der Gewindeteil 22' im Anschlagteil 21 und der Gewindeteil 22' im vorderen Stellkeil 11 eingeschraubt ist. Beim Drehen der Schraubenspindel 22 werden somit beide Stellkeile 11, 13 gleichzeitig aufeinander zu oder voneinander weg bewegt und bewirken damit, dass das Tragelement 3 des Schuhs in Höhenrichtung mehr oder weniger stark verstellt wird. Die Schraubenspindel 22 ist in einer Bohrung 17' des Gehäuses 6 sicher geführt, wobei aus diesem ein sechskantiger Schraubkopf 17 der Spindel herausragt, der mit einem Stellblech 24 zur Verstellsicherung der Schraubenspindel 19 zusammenwirkt. Zum Arretieren des Stellbleches 24 dient eine in die Grundplatte 2 befestigbare Schraube 25.

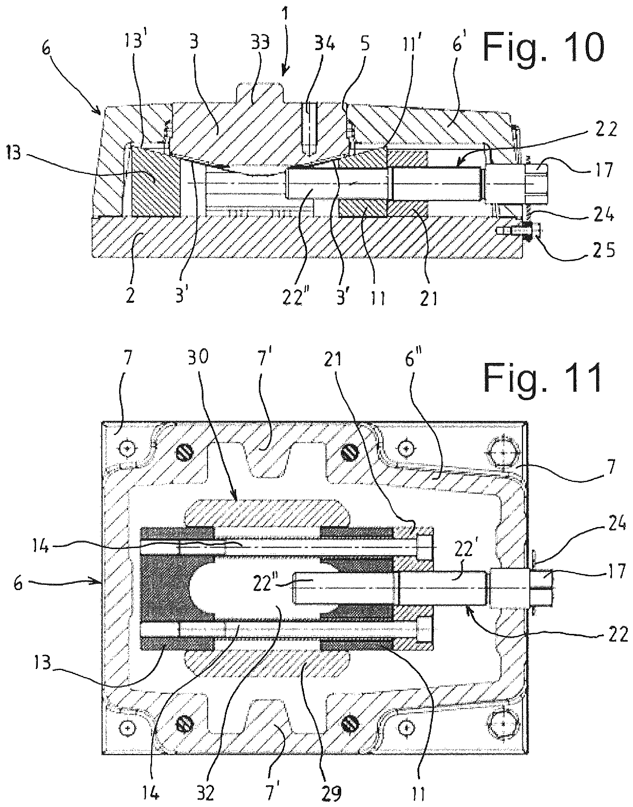

Gemäss Fig. 10 ist das Tragelement 3 unterseitig kalottenförmig ausgestaltet, wobei die Neigung ihrer wirksamen Aussenfläche 3' mit der Schräge der Auflageflächen 11', 13' übereinstimmt. Bei Belastung des Nivellierschuhs 1 wird die auf das Tragelement 3 wirkende Last gleichmässig auf beide Stellkeile 11 und 13 aufgeteilt, während die auf sie wirkenden Axialkräfte einander entgegenwirken und somit eine aufwendige Axiallagerung der Schraubenspindel 22 entbehrlich ist. Da das Tragelement 3 aussenseitig vollumfänglich in der Zentrierbohrung 5 des robusten Gehäuses 6 geführt ist, ist der Nivellierschuh insgesamt sehr stabil gebaut und kann auch den Auswirkungen von Horizontalkräften standhalten.

Auf der Oberseite des Tragelementes 3 kann mindestens eine nicht näher dargestellte Distanzscheibe, deren Oberseite eine Auflagefläche für den zu nivellierenden Gegenstand bildet, aufgelegt werden. Zum Halten der Distanzscheibe auf dem Tragelement 3 ist ein Zentrierdorn 33 vorgesehen, der primär aber für die maximale horizontale Kraftübertragung von der Werkzeugmaschine in das Gehäuse 6 dient. Ferner ist eine Gewindebohrung 34 im Tragelement 3 für Montagezwecke vorgesehen.

Wie in Fig. 9 ersichtlich ist, hat der vorzugsweise einstückig hergestellte Träger 30 einschliesslich das Tragelement 3 ein U-förmiges Profil mit zwei seitlichen Führungsstegen 29 und einen mittleren Stützrahmen 31, auf dem das Tragelement 3 angeordnet ist. Dies entspricht annähernd dem Tragelement 45 nach Fig. 4. Die Baulänge der Führungsstege 29 ist so bemessen, dass auch bei maximal auseinanderbewegten Stellkeilen 11, 13 diese noch seitlich von den Führungsstegen mindestens teilweise überlappt sind. Damit ist sichergestellt, dass die Stellkeile 11, 13 den Träger 30 mit dem Tragelement 3 in der zentrierten Position zusammenhalten.

Zur kompakten Bauweise des Schuhs trägt bei, dass die Verbindungsschrauben 14 parallel zueinander im Hohlraum 32 des Trägers 30 liegen, während die Schraubenspindel 22 der Verstellvorrichtung 4 in der mittleren Längsebene des Hohlraums 32 dazwischen liegt.

Die Wanddicken des Gehäuses 6 können je nach Baugrösse des Nivellierschuhs zwischen annähernd 5 und 20 Millimetern betragen und zur höheren Stabilität des Nivellierschuhs ist das Gehäuse 6 vorzugsweise aus hochfestem Material, zum Beispiel Sphäroguss, hergestellt.

Die Erfindung ist mit den oben erläuterten Ausführungsbeispielen ausreichend dargetan. Sie könnte aber noch durch andere Varianten veranschaulicht sein. Im Prinzip könnte das Gehäuse kastenförmig ausgebildet sein und dabei auch die Grundplatte, die Seitenwandung und eine auf der Oberseite befestigbare deckelartige Platte bilden, welche mit der Zentrierbohrung versehen wäre.

Das scheibenförmige Tragelement 3 könnte anstatt mit einer runden eine ovale oder mehreckige Aussenform aufweisen und die Zentrierbohrung 5 des Gehäuses würde entsprechend gleich ausgebildet sein.

Selbstverständlich können ebenso die Verstellvorrichtung und das mit ihr zusammenwirkende Tragelement wie auch das Gehäuse im Rahmen der Erfindung anders ausgestaltet sein. So könnten die unterseitigen Kontaktflächen 20' beim Tragelement gemeinsam statt konvex in konkaver oder ähnlichen Form ausgestaltet sein.

Als zusätzliche Stabilitätserhöhung könnte eine Zentrierhülse axial durch das Tragelement 3 bis in die Grundplatte 2 geführt und darin fixiert sein, dies analog wie die Zentrierhülse 30 gemäss der eingangs gewürdigten Druckschrift EP 1 236 006 B1.

In ähnlicher Weise könnte das Tragelement und die Grundplatte zentral durchgebohrt sein, damit durch diese sogenannte Wellensteinschrauben als Befestigungsmittel durchführbar sind, die auf der Oberseite dem Tragelement angreifen und durch den Schuh auf bekannte Art im Fundament verankert werden und damit die Verspannkraft des Schuhs auf dem Fundament erhöhen. Zweckmässigerweise ist sie derart angeordnet, dass sie im Verspannzustand jeweils auf der Oberseite des Tragelementes das Maschinengestell der Werkzeugmaschine oder ähnlichem anzieht und im Fundament verankerbar ist.

Es könnte als Befestigungsmittel alternativ eine Fixationsschraube oder ähnlich vorgesehen sein, welche in der Grundplatte verschraubt würde, die vorzugsweise seitlich auf einem externen Rahmen horizontal abstützbar wäre.

Insbesondere die Grundplatte bei den erläuterten Ausführungsbeispielen könnte sich in der Breite und/oder in der Länge über den Aussenumfang des Gehäuses hinaus erstrecken, um diese zusätzlichen Verschraubungen der Grundplatte 2 im Fundament oder dergleichen zu ermöglichen, um die höheren Horizontalkräfte vom Gehäuse durch diesen in den Boden zu übertragen. Ferner könnten die Verschraubungen mit Aussparungen in einem speziellen oder abgedichteten Gehäuse im Bodenfundament einbetoniert werden. Dies wird durch einen bestimmten Dichtungssatz bei denjenigen Varianten erzielt, die schon ein Gehäuse bzw. Haube besitzen, oder mit einer entsprechenden Haube mit spezifischem Dichtungssatz versehbar sind.

Die Grundplatte könnte auf ihrer unteren Seite mit wenigstens einem Antirutschbelag und/oder einer Dämmungsplatte aus synthetischem Material, vorzugsweise Gummi, versehen sein, um im betrieblichen Zustand die auf den Nivellierschuh entstehenden Horizontalkräfte um 360° aufzunehmen. Die Grundplatte könnte dabei mit einem zentralen Dorn oder einer Verschraubung zur Verbindung des Schuhs an der Maschine versehen sein.

Im Prinzip könnten die Stützmittel einstückig als Teil der Grundplatte verbindend ausgebildet sein, wie zum Beispiel diejenigen gemäss Fig. 1. Ebenso könnten die Tragelemente jeweils statt U-förmig als verstärkte Platten ausgebildet sein. Diese Stützflächen können eben oder auch andersförmig ausgebildet sein, so ähnlich wie beim Schuh nach Fig. 1. Auch die Verstellvorrichtung könnte im Prinzip anders ausgestaltet sein. Die Stützmittel könnten auch vor- und/oder rückseitig und/oder beidseitig bei der Verstellvorrichtung angeordnet sein.

Die Grundplatte und auch das höhenverstellbare Tragelement könnten selbstverständlich ein- oder mehrteilig bzw. andersförmig als dargestellt ausgebildet sein. Die Grundplatte bzw. das Tragelement könnten mehreckig, rund oder ähnlich geformt und als Klotz oder rahmenförmig oder dergleichen ausgebildet sein.

## Patentansprüche

1. Nivellierschuh, vorzugsweise für eine Werkzeugmaschine oder ähnlichem, der mit einer Grundplatte (2,12,42,62,72,82), einer auf dieser angeordneten Verstellvorrichtung (4,15) und einem von letzterer höhenverstellbaren Tragelement (3,20,45,65,75,85) für den zu nivellierenden Gegenstand, vorzugsweise eine Werkzeugmaschine oder ähnlichem, versehen ist, wobei das höhenverstellbare Tragelement (3,20,45,65,75,85) von wenigstens einem Stützmittel (16,46,66,76,88) seitlich abgestützt ist, um die von der Werkzeugmaschine oder ähnlichem im betrieblichen Zustand erzeugten Horizontalkräfte aufzunehmen, wobei das höhenverstellbare Tragelement (3,20,45,65,75,85) U-förmig mit zwei wenigstens seitlichen Schenkeln (23,29,45',65',75',82) ausgebildet ist, **dadurch gekennzeichnet , dass** bei dem Tragelement bzw. den Schenkeln außenseitig das wenigstens eine auf der Grundplatte gehaltene Stützmittel (16,46,66,76,88) zumindest beidseitig zu der Verstellvorrichtung (4,15) angreift.

2. Nivellierschuh nach Anspruch 1, **dadurch gekennzeichnet, dass** bei dem U-förmig mit zwei seitlichen Schenkeln (23, 45', 65', 75') ausgebildeten Tragelement (20, 45, 65, 75) aussenseitig je ein Stützmittel (16, 46, 66, 76) beidseitig zu der Verstellvorrichtung (15) angreift.

3. Nivellierschuh nach Anspruch 1 oder 2, **dadurch gekennzeichnet, dass**
das Stützmittel (16, 46, 66, 76, 88) und das höhenverstellbare Tragelement (20, 45, 65, 75, 85) mit korrespondierenden, annähernd parallel zu der Traglastrichtung (L) verlaufenden Stützflächen (27, 28, 47, 48, 68, 69, 78, 79) derart ausgebildet sind, dass von diesen Stützmitteln Horizontalkräfte annähernd um 360° aufnehmbar sind.

4. Nivellierschuh nach einem der Ansprüche 1 bis 3, **dadurch gekennzeichnet, dass**
beidseitig zum Tragelement (20) je ein Stützmittel (16) angeordnet ist, welches jeweils mit einer gewölbten oder ähnlich geformten Stützfläche (27, 28) ausgebildet und vorzugsweise konvex und dasjenige des Tragelementes konkav geformt ist.

5. Nivellierschuh nach einem der Ansprüche 1 bis 3, **dadurch gekennzeichnet, dass**
beidseitig zum Tragelement (65, 75) je zwei Stützmittel (66, 76) angeordnet sind, die mit je einer Stützfläche (68, 69, 78, 79) in je einer Winkelschräge (α) zur Längsausbildung der Schenkel (65', 75') versehen sind.

6. Nivellierschuh nach Anspruch 5, **dadurch gekennzeichnet, dass** diese eben ausgebildeten Stützflächen (68, 69, 78, 79) in je einem Aussenbereich der Schenkel (65', 75') symmetrisch zueinander angeordnet, ihre Senkrechten gegen das Zentrum hin ausgerichtet und die Winkelschrägen (α) vorzugsweise gleich gross sind und zwischen 10° und 60° betragen.

7. Nivellierschuh nach einem der Ansprüche 1 bis 6, **dadurch gekennzeichnet, dass**
die Stützmittel (16, 66, 76) jeweils durch vorzugsweise mehrere Zentrierstifte (16', 66', 76') und wenigstens einem Befestigungselement mit der Grundplatte (12, 62, 72) verbunden sind.

8. Nivellierschuh nach einem der Ansprüche 1 bis 7, **dadurch gekennzeichnet, dass**
ein das Tragelement (45) umgebender rahmenförmiger Stützring (44) mit innenseitigen Stützmitteln (46) vorgesehen ist, der auf der Grundplatte (42) lösbar befestigt ist.

9. Nivellierschuh nach Anspruch 8, **dadurch gekennzeichnet, dass** die Stützmittel (46) im rahmenförmigen Stützring (44) innenseitig mit mehreren Stützflächen (48) versehen sind, welche mit vorzugsweise vier Stützflächen (49) aussenseitig beim Tragelement (45) korrespondieren.

10. Nivellierschuh nach einem der Ansprüche 1 bis 9, **dadurch gekennzeichnet, dass**
die Stützmittel (76) jeweils durch ein Verstellelement (71) senkrecht gegen eine korrespondierende Stützfläche (79) beim Tragelement (75) für eine spielfreie Verbindung justierbar sind.

11. Nivellierschuh nach einem der Ansprüche 1 bis 10, **dadurch gekennzeichnet, dass**
die annähernd parallel zur Traglastrichtung (L) verlaufenden Stützflächen (47, 48, 68, 69, 78, 79) zumindest im oberen Bereich des Stützmittels (16, 46, 66, 76) ausgebildet sind, wobei das Stützmittel (16, 46, 66, 76) annähernd eine Höhe aufweist, welche sich bis annähernd zu der Oberseite des höhenverstellbaren Tragelementes (20, 45, 65, 75) in seiner untersten Position erstreckt.

12. Nivellierschuh nach einem der Ansprüche 1 bis 3, **dadurch gekennzeichnet, dass**
den beiden seitlichen Schenkeln (86) des U-förmigen Tragelementes (85) jeweils ein vorstehendes Sockelelement (87) und wenigstens ein mit diesem korrespondierendes Stützmittel (88) in der Grundplatte (82) zugeordnet ist.

13. Nivellierschuh nach Anspruch 12, **dadurch gekennzeichnet, dass** die gegenüberliegenden Sockelelemente (87) des Tragelementes (85) jeweils eine Öffnung (88') aufweisen, in die je ein in der Grundplatte (82) befestigter Zentrierbolzen als Stützmittel (88) annähernd spielfrei geführt ist.

14. Nivellierschuh nach Anspruch 1, **dadurch gekennzeichnet, dass** ein das Tragelement (3) aussenseitig in einer Zentrierbohrung (5) führendes Gehäuse (6) als Stützmittel vorgesehen ist, welches vorzugsweise auf der Grundplatte (2) befestigt oder mit dieser verbunden ist.

15. Nivellierschuh nach Anspruch 14, **dadurch gekennzeichnet, dass** das als Stützmittel ausgebildete Gehäuse (6) relativ dickwandig und topf- oder kastenförmig ausgebildet ist, sein oberer Gehäuseteil (6') mit der Zentrierbohrung (5) das Tragelement (3) vorzugsweise vollumfänglich um 360° umgibt und im Gehäuse (6) auch die Verstellvorrichtung (4) für das Tragelement (3) enthalten ist.

16. Nivellierschuh nach Anspruch 15, **dadurch gekennzeichnet, dass** das Tragelement (3) scheibenförmig mit einer runden, ovalen oder mehreckigen Aussenform und die Zentrierbohrung (5) des Gehäuses (6) entsprechend gleich und mit einem Träger (30) mit beidseitig der Verstellvorrichtung (4) je einem Schenkel (29) ausgebildet ist.

17. Nivellierschuh nach einem der Ansprüche 14 bis 16, **dadurch gekennzeichnet, dass**
das Gehäuse (6) seitlich mit quer zur Verschieberichtung der Verstellvorrichtung (4) gerichteten Verstärkungsrippen (7) versehen ist, die vom oberen Gehäuseteil (6') bis zur Grundplatte (2) ragen, und/oder seine Seitenwände zumindest teils gegen oben hin schräg nach innen gerichtet sind.

18. Nivellierschuh nach einem der Ansprüche 1 bis 17, **dadurch gekennzeichnet, dass**
das Tragelement und die Grundplatte vorzugsweise zentral durchgebohrt sind und eine Zentrierhülse axial durch das Tragelement bis in die Grundplatte geführt ist.

19. Nivellierschuh nach einem der Ansprüche 1 bis 18, **dadurch gekennzeichnet, dass**
das Tragelement und die Grundplatte vorzugsweise zentral durchgebohrt sind und wenigstens ein Befestigungsmittel durchführbar ist, welches derart angeordnet ist, dass es im Verspannzustand auf der Oberseite des Tragelementes das Maschinengestell der Werkzeugmaschine oder ähnlichem anzieht und in der Grundplatte befestigbar bzw. im Fundament verankerbar ist.

20. Nivellierschuh nach Anspruch 19, **dadurch gekennzeichnet, dass** das als Wellensteinschraube oder ähnlich ausgebildete Befestigungsmittel im Fundament verankerbar ist.

21. Nivellierschuh nach Anspruch 19, **dadurch gekennzeichnet, dass** das als Fixationsschraube oder ähnlich ausgebildete Befestigungsmittel in der Grundplatte verschraubbar ist, welche vorzugsweise seitlich auf einem externen Rahmen horizontal abstützbar ist.

22. Nivellierschuh nach einem der Ansprüche 19 bis 21, **dadurch gekennzeichnet, dass**
die Grundplatte im Fundament in Aussparungen in einem separaten oder abgedichteten Gehäuse im Fundament einbetonierbar sind.

23. Nivellierschuh nach einem der Ansprüche 19 bis 22, **dadurch gekennzeichnet, dass**
die Grundplatte auf ihrer unteren aufliegenden Fläche mit wenigstens einem Antirutschbelag und/oder einer Dämmungsplatte aus synthetischem Material, vorzugsweise Gummi, versehen ist, die im betrieblichen Zustand auf den Nivellierschuh entstehenden Horizontalkräfte um 360° aufnimmt.

24. Nivellierschuh nach einem der Ansprüche 19 bis 23, **dadurch gekennzeichnet, dass**
die Grundplatte mittels vorzugsweise mehreren Ankerbolzen fest im Boden verankerbar ist.

25. Nivellierschuh nach einem der Ansprüche 1 bis 24, **dadurch gekennzeichnet, dass**
die Verstellvorrichtung (4, 15) durch zwei zu- oder voneinander weg bewegbaren Stellkeile (11, 13) mit Auflageflächen (11', 13') gebildet ist, auf denen korrespondierende unterseitige Gleitflächen (20') des Tragelementes (20,30,45,65,75,85) mit der gleichen Neigung flächig aufliegen und beidseitig bei den Stellkeilen (11, 13) parallel zu ihren axialen Verstellrichtung die seitlichen Schenkel (23) des Tragelementes (20,30,45,65,75,85) angeordnet sind.

26. Nivellierschuh nach Anspruch 25, **dadurch gekennzeichnet, dass** die unterseitigen Kontaktflächen beim Tragelement gemeinsam konkav oder ähnlich geformt sind.

## Claims

1. A levelling shoe, preferably for a tooling machine or similar, which is provided with a base plate (2, 12, 42, 62, 72, 82), an adjustment device (4, 15) arranged thereon, and a bearing device (3, 20, 45, 65, 75, 85) for the object to be levelled, preferably a tooling machine or the like, wherein the height-adjustable bearing device (3, 20, 45, 65, 75, 85) is laterally supported by at least one support means (16, 46, 66, 76, 88) to absorb the horizontal forces generated by the tooling machine or similar during operation, wherein the height-adjustable support aid (3, 20, 45, 65, 75, 85) is U-shaped with at least two lateral limbs (23, 29, 45', 65', 75', 82), **characterised in that**
on the outer side of the support element or the limbs, the at least one support aid (16, 46, 66, 76, 88) held on the base plate engages with the adjustment device (4, 15) on at least both sides.

2. Levelling shoe according to claim 1, **characterised in that**
in which a bearing device (20, 45, 65, 75) formed in a U-shape with two lateral limbs (23, 45', 65', 75') engages on both sides with a support aid (16, 46, 66, 76) on the outer side of the adjustment device (15).

3. Levelling shoe according to either of claims 1 or 2, **characterised in that** the support aid (16, 46, 66, 76, 88) and the height-adjustable bearing device (20, 45, 65, 75, 85) with corresponding support surfaces (L) (27, 28, 47, 48, 68, 69, 78, 79) are designed such that horizontal forces can be absorbed by these support aids over approximately 360°.

4. Levelling shoe according to any of claims 1 to 3, **characterised in that** a support aid (16) is arranged on each side of the bearing device (20), each of which has a curved or similarly shaped support surface (27, 28) and, preferably convex whilst the same on the bearing device is concave.

5. Levelling shoe according to any of claims 1 to 3, **characterised in that** two support aids (66, 76) are arranged on each side of the bearing device (65, 75), each of which has a support surface (68, 69, 78, 79) at an angle (α) to the longitudinal direction of the limbs (65', 75').

6. Levelling shoe according to claim 5, **characterised in that**
these newly formed support surfaces (68, 69, 78, 79) are arranged symmetrically to one another in an outer region of each of the limbs (65', 75'), their perpendiculars are aligned towards the centre, and the angles (α) are preferably of equal magnitude and range between 10° and 60°.

7. Levelling shoe according to any of claims 1 to 6, **characterised in that** the support aids (16, 66, 76) are each connected to the base plate (12, 62, 72) by means of, preferably, several centring pins (16', 66', 76') and at least one fastening unit.

8. Levelling shoe according to any of claims 1 to 7, **characterised in that** a frame-shaped support ring (44) surrounding the bearing device (45) is provided, featuring internal support aids (46), and is detachably secured to the base plate (42).

9. Levelling shoe according to claim 8, **characterised in that**
the support aids (46) in the frame-shaped support ring (44) are provided on the inner side with a number of support surfaces (48), which correspond to preferably four support surfaces (49) on the outer side of the bearing device (45).

10. Levelling shoe according to any of claims 1 to 9, **characterised in that** the support aids (76) can each be adjusted by an adjustment device (71) so that they bear perpendicularly against a corresponding support surface (79) on the bearing device (75), thereby ensuring a connection with no backlash.

11. Levelling shoe according to any of claims 1 to 10, **characterised in that** the support surfaces (47, 48, 68, 69, 78, 79), which run approximately parallel to the direction of the load (L), are formed at least in the upper region of the support aid (16, 46, 66, 76), wherein the support aid (16, 46, 66, 76) has a height which extends approximately to the upper surface of the height-adjustable bearing device (20, 45, 65, 75) in its lowest position.

12. Levelling shoe according to any of claims 1 to 3, **characterised in that** each of the two lateral limbs (86) of the U-shaped bearing device (85) is associated with a protruding base element (87) and at least one corresponding support aid (88) in the base plate (82).

13. Levelling shoe according to claim 12, **characterised in that** the opposing base elements (87) of the bearing device (85) each have an opening (88') into which a centring pin, secured in the base plate (82), is guided as a support aid (88) with virtually no backlash.

14. Levelling shoe according to claim 1, **characterised in that** a housing (6) is provided as a support aid, which guides the bearing device (3) on the outside through a centring bore (5) and is preferably secured to or connected to the base plate (2).

15. Levelling shoe according to claim 14, **characterised in that**
the housing (6), which is designed as a support aid, is relatively thick-walled and has a pot- or box-shaped design, and its upper housing section (6') with centring bore (5) preferably surrounds the supporting element (3) completely over 360°, and the housing (6) also contains the adjustment device (4) for the bearing device (3).

16. Levelling shoe according to claim 15, **characterised in that** the The bearing device (3) is disc-shaped with a round, oval or polygonal outer contour, and the centring bore (5) of the housing (6) is correspondingly shaped; it is designed with a support (30) having a limb (29) on either side of the adjustment device (4),

17. Levelling shoe according to any of claims 14 to 16, **characterised in that** the sides of the housing (6) are fitted with reinforcing ribs (7) oriented transversely to the direction of movement of the adjustment device (4), which extend from the upper part of the housing (6') down to the base plate (2), and/or its side walls are at least partly inclined inwards towards the top.

18. Levelling shoe according to any of claims 1 to 17, **characterised in that** the bearing device and the base plate are preferably drilled through centrally, and a centring sleeve is guided axially through the bearing device and into the base plate.

19. Levelling shoe according to any of claims 1 to 18, **characterised in that** the bearing device and the base plate are preferably drilled through centrally, and at least one fastening unit can be passed through them; this fastening unit is arranged such that, when tightened, it secures the machine frame of the tooling machine or similar to the upper surface of the bearing device and can be fastened to the base plate or anchored in the foundation.

20. Levelling shoe according to claim 19, **characterised in that**
the fastening unit, which is designed as an anchor bolt or similar, can be anchored in the foundation.

21. Levelling shoe according to claim 19, **characterised in that**
the fastening unit, designed as a fixing screw or similar, can be screwed into the base plate, which can preferably be supported horizontally at the side on an external frame.

22. Levelling shoe according to any of claims 19 to 21, **characterised in that** the base plate can be set in concrete within the foundation, either in recesses or within a separate or sealed housing within the foundation.

23. Levelling shoe according to any of claims 19 to 22, **characterised in that** the base plate is fitted on its lower contact surface with at least one non-slip coating and/or an insulating plate made of synthetic material, preferably rubber, which, when in operation, absorbs the horizontal forces acting on the levelling shoe over a 360° range.

24. Levelling shoe according to any of claims 19 to 23, **characterised in that** the base plate can be securely anchored to the ground, preferably using several anchor bolts.

25. Levelling shoe according to any of claims 1 to 24, **characterised in that** the adjustment device (4, 15) is formed by two adjustment wedges (11, 13) that can be moved towards or away from one another, having bearing surfaces (11', 13') on which corresponding lower sliding surfaces (20') of the bearing device (20, 30, 45, 65, 75, 85) rest flat against with the same inclination, and the lateral legs (23) of the bearing device (20, 30, 45, 65, 75, 85) are arranged on both sides of the adjustment wedges (11, 13) parallel to their axial direction of adjustment.

26. Levelling shoe according to claim 25, **characterised in that** the contact surfaces on the underside of the bearing device are concave or similarly shaped.

## Revendications

1. Patin de nivellement, de préférence pour une machine-outil ou analogue, qui est pourvu d'une embase (2, 12, 42, 62, 72, 82), d'un dispositif (4, 15) de réglage monté sur celle-ci et d'un élément (3, 20, 45, 65, 75, 85), réglable en hauteur par ce dernier, porteur de l'objet à niveler, de préférence une machine-outil ou analogue, dans lequel l'élément (3, 20, 45, 65, 75, 85) porteur réglable en hauteur est appuyé latéralement par un moyen (16, 46, 66, 76, 88) d'appui, pour absorber les forces horizontales produites dans l'état de fonctionnement par la machine-outil ou analogue, dans lequel l'élément (3, 20, 45, 65, . 75, 85) porteur réglable en hauteur est de constitution en forme de U, ayant au moins deux branches (23, 29, 45', 65', 75', 82) latérales, **caractérisé en ce que**, dans l'élément porteur ou les branches du côté extérieur, le au moins un moyen (16, 46, 66, 76, 88) d'appui maintenu sur l'embase attaque au moins des deux côtés par rapport au dispositif (4, 15) de réglage.

2. Patin de nivellement suivant la revendication 1, **caractérisé en ce que**,
dans l'élément (20, 45, 65, 75) porteur de constitution en forme de U ayant deux branches (23, 45', 65', 75') latérales du côté extérieur, respectivement un moyen (16, 46, 66, 76) d'appui attaque des deux côtés par rapport au dispositif (15) de réglage.

3. Patin de nivellement suivant la revendication 1 ou 2, **caractérisé en ce que**
le moyen (16, 46, 66, 76, 88) d'appui et l'élément (20, 45, 65, 75, 85) porteur réglable en hauteur sont constitués en ayant des surfaces (27, 28, 47, 48, 68, 69, 78, 79) d'appui correspondantes s'étendant à peu près parallèlement à la direction (L) de charge de portée, de manière à pouvoir absorber à peu près à 360° des forces horizontales de ces moyens d'appui.

4. Patin de nivellement suivant l'une des revendications 1 à 3, **caractérisé en ce que**,
des deux côtés par rapport à l'élément (20) porteur, est disposé respectivement un moyen (16) d'appui, qui est constitué respectivement en ayant une surface (27, 28) d'appui incurvée ou formée de manière analogue et de préférence convexe et celle de l'élément porteur est concave.

5. Patin de nivellement suivant l'une des revendications 1 à 3, **caractérisé en ce que**,
des deux côtés par rapport à l'élément (65, 75) porteur, sont disposés respectivement deux moyens (66, 76) d'appui, qui sont pourvus de respectivement une surface (68, 69, 78, 79) d'appui en respectivement une inclinaison (α) angulaire par rapport à la constitution longitudinale des branches (65', 75').

6. Patin de nivellement suivant la revendication 5, **caractérisé en ce que**
ces surfaces (68, 69, 78, 79) d'appui de constitution plane sont disposées dans respectivement une partie extérieure des branches (65' , 75') en étant symétriques l'une de l'autre, leur perpendiculaire étant dirigée sur le centre et les inclinaisons (α) angulaires étant de préférence les mêmes et comprises entre 10° et 60°.

7. Patin de nivellement suivant l'une des revendications 1 à 6, **caractérisé en ce que**
les moyens (16, 66, 76) d'appui sont assemblés à l'embase (12, 62, 72) respectivement par de préférence plusieurs goupilles (16', 66', 76') de centrage et par au moins un élément de fixation.

8. Patin de nivellement suivant l'une des revendications 1 à 7, **caractérisé en ce qu'**
un anneau (44) d'appui en forme de cadre entourant l'élément (45) porteur pourvu de moyens (46) d'appui du côté intérieur en étant fixé de manière amovible à l'embase (42).

9. Patin de nivellement suivant la revendication 8, **caractérisé en ce que**
les moyens (46) d'appui dans l'anneau (44) d'appui en forme de cadre sont pourvus du côté intérieur de plusieurs surfaces (48) d'appui, qui correspondent de préférence aux quatre surfaces (49) d'appui du côté extérieur dans l'élément (45) porteur.

10. Patin de nivellement suivant l'une des revendications 1 à 9, **caractérisé en ce que**
les moyens (76) d'appui sont, pour un assemblage sans jeu, ajustés par un élément (71) de réglage perpendiculairement à une surface (79) d'appui correspondante de l'élément (75) porteur.

11. Patin de nivellement suivant l'une des revendications 1 à 10, **caractérisé en ce que**
les surfaces (47, 48, 68, 69, 78, 79) d'appui, s'étendant à peu près parallèlement à la direction (L) de charge de portée, sont constituées au moins dans la partie supérieure du moyen (16, 46, 66, 76) d'appui, dans lequel le moyen (16, 46, 66, 76) d'appui a à peu près une hauteur, qui s'étend jusqu'à peu près la face supérieure de l'élément (20, 45, 65, 75) porteur réglable en hauteur dans sa position la plus basse.

12. Patin de nivellement suivant l'une des revendications 1 à 3, **caractérisé en ce que**,
aux deux branches (86) latérales de l'élément (85) porteur en forme de U est affecté respectivement un élément (87) de socle en saillie et au moins un moyen (88) d'appui correspondant à celui-ci dans l'embase (82).

13. Patin de nivellement suivant la revendication 12, **caractérisé en ce que**
les éléments (87) de socle opposés de l'élément (85) porteur ont chacun une ouverture (88'), dans laquelle respectivement un axe (88) de centrage fixé dans l'embase (82) est guidé à peu près sans jeu.

14. Patin de nivellement suivant la revendication 1, **caractérisé en ce qu'**
il est prévu comme moyen d'appui, une carcasse (6) guidant l'élément (3) porteur du côté extérieur dans un trou (5) de centrage, qui est fixé de préférence sur l'embase (2) ou est assemblé à celle-ci.

15. Patin de nivellement suivant la revendication 14, **caractérisé en ce que**
la carcasse (6), constituée en moyen d'appui, est de constitution à paroi relativement épaisse et en forme de pot ou de caisson, sa partie (6') supérieure de carcasse ayant le trou (5) de centrage entoure sur 360°, de préférence complètement l'élément (3) porteur et, dans la carcasse (6), est contenu également le dispositif (4) de réglage de l'élément (3) porteur.

16. Patin de nivellement suivant la revendication 15, **caractérisé en ce que**
l'élément (3) porteur est en forme de disque, en ayant une forme extérieure circulaire, ovale ou polygonale et le trou (5) de centrage de la carcasse (6) est d'une même constitution correspondante et avec un support (30) ayant respectivement une branche (29) des deux côtés du dispositif (4) de réglage.

17. Patin de nivellement suivant l'une des revendications 14 à 16, **caractérisé en ce que**
la carcasse (6) est pourvue latéralement de nervures (7) de renfort dirigées transversalement à la direction de déplacement du dispositif (4) de réglage, qui font saillie de la partie (6') supérieure de la carcasse jusqu'à l'embase (2), et/ou ces parois latérales sont dirigées au moins en partie vers le haut en étant inclinées vers l'intérieur.

18. Patin de nivellement suivant l'une des revendications 1 à 17, **caractérisé en ce que**
l'élément porteur et l'embase sont de préférence alésés centralement et un manchon central est guidé axialement dans l'élément porteur jusque dans l'embase.

19. Patin de nivellement suivant l'une des revendications 1 à 18, **caractérisé en ce que**
l'élément porteur et l'embase sont de préférence alésés centralement et au moins un élément de fixation peut traverser, lequel est disposé de manière à attirer, à l'état bloqué, sur la face supérieure de l'élément porteur, le bâti de la machine-outil ou analogue, et de manière à pouvoir être fixé dans l'embase ou ancré dans la sole.

20. Patin de nivellement suivant la revendication 19, **caractérisé en ce que**
le moyen de fixation constitué sous la forme d'une vis de scellement extensible ou analogue peut être ancré dans la sole.

21. Patin de nivellement suivant la revendication 19, **caractérisé en ce que**
l'élément de fixation constitué en vis de fixation ou analogue peut être vissé dans l'embase, laquelle peut être appuyée horizontalement, de préférence latéralement sur un cadre extérieur.

22. Patin de nivellement suivant l'une des revendications 19 à 21, **caractérisé en ce que**
l'embase peut être incorporée par bétonnage dans la sole dans des évidements en une carcasse distincte ou rendue étanche.

23. Patin de nivellement suivant l'une des revendications 19 à 22, **caractérisé en ce que**
l'embase est pourvue, sur sa surface d'appui inférieure, d'au moins un revêtement antiglissement et/ou d'une plaque d'amortissement en matière synthétique, de préférence en caoutchouc qui, dans l'état de fonctionnement, absorbe sur 360° des forces horizontales se créant sur le patin de nivellement.

24. Patin de nivellement suivant l'une des revendications 19 à 23, **caractérisé en ce que**
l'embase peut être ancrée rigidement dans le sol, de préférence au moyen de plusieurs boulons d'ancrage.

25. Patin de nivellement suivant l'une des revendications 1 à 24, **caractérisé en ce que**
le dispositif (4, 15) de réglage est formé de deux coins (11, 13) de réglage pouvant être rapprochés ou éloignés l'un de l'autre et ayant des surfaces (11', 13') d'application, sur lesquelles des surfaces (20') de glissement correspondant du côté inférieur de l'élément (20, 30, 45, 65, 75, 85) de porteur sont disposées à plat en ayant la même inclinaison et, des deux côtés des coins (11, 13) de réglage, sont disposées parallèlement à leur direction de déplacement axiale, les branches (23) latérales de l'élément (20, 30, 45, 65, 75, 85) porteur.

26. Patin de nivellement suivant la revendication 25, **caractérisé en ce que**
les surfaces de contact du côté inférieur de l'élément porteur sont conjointement concaves ou analogues.
